# EUROPEAN PATENT APPLICATION

(11) **EP 2 177 734 A2**
(43) Date of publication of application: **21.04.2010**
(21) Application number: 09172925.1
(22) Date of filing: 13.10.2009
(51) Int. Cl.: F02C 3/26, F01K 23/06

(54) **Steam cooled direct fired coal gas turbine**

(30) Priority: 14.10.2008 US 250904
(71) Applicant: General Electric Company, Schenectady, NY 12345 (US)
(72) Inventor: Draper, Samuel David, Simpsonville, SC 29681 (US)
(74) Representative: Gray, Thomas

(57) **Abstract**

A gas turbine (14) includes a combustor (10) configured to burn a hydrocarbon fuel input and provide a combustion product hot gas output (12) to a turbine inlet (13) having a turbine inlet temperature exceeding about 2200°F, the hot gas output (12) also includes ash in an amount of 0.1% or more by weight of the hydrocarbon fuel input. The turbine also includes a stationary nozzle (36) configured to receive the hot gas output (12) that includes a plurality of circumferentially spaced vanes (29) and a vane cooling circuit (37) located within vane sidewalls (109, 111) configured for circulation of steam as a coolant. The turbine also includes a rotatable rotor (16) configured to receive the hot gas output (12) exiting the nozzle (36) that includes a plurality of buckets (28) and a bucket cooling circuit (39) located within the bucket sidewalls (150, 152) and shank (132) that is configured for circulation of steam (27) as a coolant for the bucket (28).

## Description

### BACKGROUND OF THE INVENTION

The subject matter disclosed herein relates generally to industrial gas turbines, and more particularly to industrial gas turbines employing steam cooling.

Modern coal power production is limited in its efficiency by the use of external combustion power plants. The maximum temperatures of the materials used in the heat transfer surfaces set the limit to Carnot efficiency. For an efficiency increase to be realized, all of the energy available in the coal must reach the combustor of the gas turbine. Thus, the generation of various coal syngases is generally not desirable due to the energy loss associated with formation of the gases themselves. In order to increase the efficiency of coal power generation, directly firing coal for internal combustion in gas turbines is desired. The direct combustion of coal in the combustor produces significantly more particulates, such as combustion ash, in the combustion gas output at the combustor exit than the combustion of gaseous fuels, such as natural gas or various coal-based or other syngases. Natural gas or various coal-based or other syngases generally have ash contents of less than 0.1% by weight of the gaseous fuel input. Due to the higher ash content of the combustion product gases at the combustor exit in coal-fired gas turbines, these turbines exhibit excessive plugging of film cooling holes in the turbine airfoils, including the turbine nozzle vanes and turbine rotor buckets, particularly the film cooling holes located on or near the leading edges of the airfoils that face into the combustion gas stream.

As such, the direct combustion of coal to fire industrial gas turbines has been extremely limited. This limitation has limited the direct combustion of coal to developmental or experimental use in turbines having a maximum firing temperature of about 2,000°F or less, and a combustor exit temperature of about 2,200°F or less. Thus, the use of coal to fire industrial gas turbines has not achieved commercial success because the limits imposed on firing temperature do not enable the turbine to achieve a desired level of efficiency, and are generally limited to a combined cycle efficiency of less than 50%, and generally to an efficiency of about 42%. In addition to coal, the direct combustion of other potential fuels, such as refinery residuals (i.e., tars, asphalts, coke, waxes and the like), biomass fuel sources and the like that produce higher ash contents as described above, also has not been pursued for the same reasons, as their particulate emissions would be expected to cause plugging of film cooling holes, thus limiting their use to firing temperatures that correspond to undesirable turbine efficiency regimes.

Due to the difficulty of using hydrocarbon fuels such as coal, refinery residuals and biomass fuels, gas turbines are presently directly powered by fuels that have gone through a series of processes to clean and refine the fuel before being burned in the combustor and directed to the turbine section to produce power that result in ash contents in the combustion gas of less than 0.1% by weight of the fuel input. However, the cleaning and refining processes necessary to produce these fuels have associated costs and efficiency penalties of their own that are undesirable.

Accordingly, it is desirable to use coal and other hydrocarbon fuels that produce a high ash content to directly fire an industrial gas turbine and to achieve efficiency greater than 50%.

### BRIEF DESCRIPTION OF THE INVENTION

According to one aspect of the invention a steam cooled, direct-fired coal gas turbine is provided. The gas turbine includes a combustor configured to burn a hydrocarbon fuel input and provide a combustion product hot gas output to a turbine inlet having a temperature exceeding about 2200° F. The hot gas output includes ash in an amount of 0.1% or more by weight of the hydrocarbon fuel input. The gas turbine also includes a stationary nozzle comprising the turbine inlet and configured to receive the hot gas output. The nozzle includes an outer band, an inner band and a plurality of circumferentially spaced vanes extending therebetween. The vanes each include an airfoil portion having a leading edge and a trailing edge, a pressure sidewall and a suction sidewall, the pressure and suction sidewalls extending between the leading and trailing edges, and a vane cooling circuit located within the sidewalls configured for circulation of steam as a coolant for the vane from a nozzle cooling circuit. The turbine also includes a rotatable rotor proximate the nozzle configured to receive the hot gas output exiting the nozzle. The rotor includes comprising a central rotor disc and a plurality of outwardly extending, circumferentially spaced buckets disposed thereon. The buckets each have a shank portion removably attached to the disc and an airfoil portion having a leading edge and a trailing edge, a pressure sidewall and a suction sidewall, the pressure and suction sidewalls extending between the leading and trailing edges, and a bucket cooling circuit located within the sidewalls and the shank configured for circulation of steam as a coolant for the bucket from a rotor cooling circuit. The rotor is configured to rotate upon receipt of the hot gas output and produce power as part of a turbine power cycle.

According to another aspect of the invention a method of operating a gas turbine by the direct combustion of coal or other high ash content hydrocarbon fuels is provided. The method includes providing a hydrocarbon fuel input to a combustor. The method also includes burning the hydrocarbon fuel input in the combustor to provide a combustion product hot gas output to a turbine inlet having a temperature exceeding about 2200° F, the hot gas output including ash in an amount of 0.1% or more by weight of the hydrocarbon fuel input. The method also includes providing the hot gas output to a stationary nozzle comprising the turbine inlet, the nozzle comprising an outer band, an inner band and a plurality of circumferentially spaced vanes extending therebetween. The vanes each include an airfoil portion having a leading edge and a trailing edge, a pressure sidewall and a suction sidewall, the pressure and suction sidewall extending between the leading the trailing edges, and a vane cooling circuit located within the sidewalls. The method also includes cooling the vanes by circulation of steam as a coolant from a nozzle cooling circuit through the vane cooling circuits. The method also includes providing the hot gas output exiting the nozzle to a rotatable rotor proximate the nozzle. The rotor includes a central rotor disk and a plurality of outwardly extending, circumferentially spaced buckets disposed thereon. The buckets each include a shank portion removably attached to the disk and an airfoil portion having a leading edge and a trailing edge, a pressure sidewall and a suction sidewall, the pressure and suction sidewalls extending between the leading and trailing edges, and a bucket cooling circuit located within the sidewalls and the shank. The rotor is configured to rotate upon receipt of the hot gas output and produce power as part of a turbine power cycle. The method also includes cooling the buckets by circulation of steam as a coolant from a rotor cooling circuit through the bucket cooling circuits.

According to yet another aspect of the invention, a gas turbine includes a combustor configured to burn a hydrocarbon fuel input and provide a combustion product hot gas output to a turbine inlet and a turbine inlet temperature exceeding about 2200°F. The hot gas output includes ash in an amount of 0.1% or more by weight of the hydrocarbon fuel input. The turbine also includes a stationary nozzle comprising the turbine inlet and configured to receive the hot gas output, and is configured for circulation of steam as a coolant from a nozzle cooling circuit. The turbine also includes a rotatable rotor proximate the nozzle configured to receive the hot gas output exiting the nozzle. The rotor is also configured for circulation of steam as a coolant from a rotor cooling circuit. The rotor is also configured to rotate upon receipt of the hot gas output and produce power as part of a turbine power cycle.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-sectional view of a turbine section of a gas turbine as disclosed herein;
FIG. 2 is an enlarged cross-sectional view of a stationary nozzle as disclosed herein;
FIG. 3 is a perspective view of a stationary nozzle as disclosed herein;
FIG. 4 is an enlarged cross-sectional view of a bucket as disclosed herein;
FIG. 5 is a section taken along the line 2-2 of FIG. 3;
FIG. 6 is an enlarged detail of FIG. 5;
FIG. 7 is a partial section of a turbulator profile in accordance with the invention; and
FIG. 8 is a partial side elevation of a lower portion of the bucket shown in FIG. 1, illustrating the coolant inlet and outlets.

The detailed description explains embodiments of the invention, together with advantages and features, by way of example with reference to the drawings.

### DETAILED DESCRIPTION OF THE INVENTION

Exemplary embodiments are directed towards combined-cycle gas turbines fired by hydrocarbon fuel, preferably coal, refinery residuals or various biomass fuels, and employing closed-circuit steam cooling paths for the cooling of the hot gas components. Steam as a cooling medium has been recognized as having advantages over air because steam has a higher heat capacity. Applying steam as a cooling medium in a closed circuit is advantageous because steam is more efficient in that the temperature losses in the combustion gas stream in the various turbine stages associated with the use of steam as a coolant are not as great as the losses of resulting from the use of compressor bleed air for cooling, including film cooling of the vanes, buckets and other turbine components. In industrial based gas turbines and especially those employing combined cycle systems, steam cooling is particularly advantageous because the heat energy imparted to the steam as it cools the gas turbine components is recovered as useful work in driving the steam turbine in the combined cycle operation. Additionally, when burning hydrocarbon fuels such as coal, a combustion product hot gas output content comprising ash in an amount of 0.1% or more by weight of the hydrocarbon fuel input may plug film cooling holes located on the leading edges of the hot gas components. Therefore, it is desirable to not have any film cooling holes on the leading edges of the hot gas components. This may be achieved using steam cooling.

Coal varies widely in its composition. It is composed primarily of rings of six carbon atoms joined together in an extremely complex layered structure that includes hydrogen, as well as significant amounts of nitrogen and oxygen. Coal is classified according to its heating value and according to its relative content of elemental carbon. For example, anthracite contains the highest proportion of pure carbon (about 86%-98%) and has the highest heat value-13,500-15,600 Btu/lb (British thermal units per pound)-of all forms of coal. Bituminous coal generally has lower concentrations of pure carbon (from 46% to 86%) and lower heat values (8,300-15,600 Btu/lb). Bituminous coals are often sub-divided on the basis of their heat value, being classified as low, medium, and high volatile bituminous and sub-bituminous. Lignite, the poorest of the true coals in terms of heat value (5,500-8,300 Btu/lb) generally contains about 46%-60% pure carbon. All forms of coal also contain other elements present in living organisms, such as sulfur and nitrogen.

Ash, including bottom ash and fly ash, is one of the residues generated in the combustion of coal. Fly ash material solidifies while suspended in the exhaust gases. Fly ash particles are generally spherical in shape and range in size from 0.5 µm to 100 µm. They consist mostly of silicon dioxide (SiO₂), which is present in two forms:
amorphous, which is rounded and smooth, and crystalline, which is sharp, pointed and
hazardous; aluminum oxide (Al₂O₃) and iron oxide (Fe₂O₃). Fly ashes are generally highly heterogeneous, consisting of a mixture of glassy particles with various identifiable crystalline phases such as quartz, mullite, and various iron oxides. Fly ash also may contain other compounds, such as calcium oxide (CaO) or lime. Two classes of fly ash are defined by ASTM C618, Class F fly ash and Class C fly ash. The chief difference between these classes is the amount of calcium, silica, alumina, and iron content in the ash. The chemical properties of the fly ash are largely influenced by the chemical content of the coal burned (i.e., anthracite, bituminous, and lignite). Ash residues from the combustion of coal may range from about 5 to about 25% or more by weight of the coal burned as the input fuel material. The ash content may vary significantly based on the type of coal burned, as well as by whether the coal is treated prior to combustion to reduce the ash content. Various known treatments may be applied to "clean" the coal prior to combustion and thereby reduce the ash content. In any case, regardless of the cleaning processes which may be employed, the ash content of coal is much greater than ash content found in conventional gas turbine fuels, such as natural gas and various syngases, where the ash contents are less than 0.1% by weight of the fuel input. Similarly, the direct combustion of other hydrocarbon fuels such as refinery residuals include coke, tar, various waxes and asphalt, as well as various biomass fuels, would also be expected to produce ash contents that are significantly higher than those of conventional hydrocarbon fuels used for direct combustion in gas turbines.

In an exemplary embodiment of the present invention, a turbine combustor 10 has an inlet 11 disposed in fluid communication with a compressor outlet (not shown) for receiving the compressed outlet air therefrom. Conventional fuel supplying means, including a suitable fuel supply, conduits and fuel injectors, are provided for mixing a suitable fuel, such as coal, refinery residuals, or biomass fuel, with the compressed outlet air for undergoing combustion in the combustor 10 and generating a combustion product hot gas output 12 therein. In the case of coal, for example, the coal may be provided in a pulverized form or an aqueous slurry. In an exemplary embodiment, the combustor 10 is a hydrocarbon fuel combustor configured for burning one of the aforementioned hydrocarbon fuels, preferably coal, and includes a plurality of circumferentially adjoining burner cans each of which includes one or more pre-mixers at the combustor inlet 11 (not shown) for premixing the fuel and air and pre-treating the fuel prior to introduction into the combustor 10 wherein it is burned at a high temperature with relatively high efficiency so as to produce relatively low hydrocarbon emissions. Notwithstanding the relatively low hydrocarbon emissions, the combustion product hot gas output will be expected to have ash contents of 0.1 % or more by weight of the fuel input, for the reasons described herein. Performance efficiency of a gas turbine 14 is primarily determined by the combustor 10 firing temperature, which is the temperature of the combustion product hot gases at the trailing edge of the first-stage turbine nozzles, just before they enter the first-stage turbine buckets. The firing temperature is frequently used as a reference with regard to discussions of turbine efficiency because the temperature at this location as the first location in the turbine at which power is produced from the hot gas output. Since steam cooling results in a relatively small temperature drop across the nozzle, references have been made herein to the turbine inlet temperature, which is the temperature at the combustor outlet and first-stage nozzle inlet, and is the highest temperature experienced by the respective nozzle stages and their associated vanes.

In combined-cycle applications, increases in firing temperature result in increased thermal efficiency, thereby setting the limit to Carnot efficiency. Increases in thermal efficiency are important because thermal efficiency directly affects the turbine operating fuel costs. In an exemplary embodiment of the present invention, the combustion product hot gas output 12 provides a turbine inlet temperature in excess of 2200°F, while the hot gas output also comprises ash in an amount of 0.1% or more by weight of the hydrocarbon fuel input, and more particularly comprising an ash content greater than 5% by weight of the hydrocarbon fuel input, and even more particularly in an amount ranging from 5-25% by weight of the hydrocarbon fuel input. When using steam cooling as described herein, the temperature at the turbine inlet may exceed 2600°F with the ash amounts described above to achieve a higher cycle efficiency for the gas turbine, and more preferably may exceed 2800°F with the ash amounts described above to achieve even further cycle efficiency of the gas turbine. It is believed that at the highest turbine inlet temperatures, namely those exceeding 2600°F, a combined cycle efficiency of about 60% may be achieved.

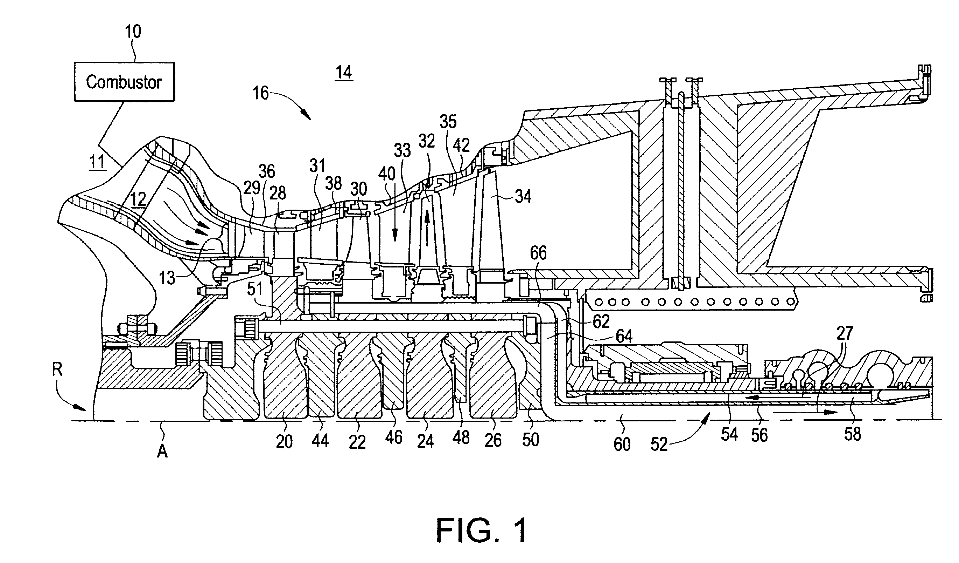

Referring to FIG. 1, a rotatable rotor assembly 16 of a gas turbine 14 is downstream of the turbine combustor 10 and includes a rotor R, with four successive stages comprising first stage rotor disks 20, second stage rotor disk 22, third stage rotor disk 24 and fourth stage rotor disk 26 mounted to and forming part of the rotatable rotor assembly 16 configured to rotate upon receipt of the hot gas output and provide power as part of a turbine power cycle. Each disk carries a plurality of buckets, including first stage buckets 28, second stage buckets 30, third stage buckets 32 and fourth stage buckets 34 circumferentially spaced and outwardly extending along the respective central rotor discs 20, 22, 24 and 26. The buckets extend outwardly into the combustion product hot gas output 12 of the turbine 16. The buckets are arranged alternately between stationary nozzles including first stage nozzle 36, second stage nozzle 38, third stage nozzle 40 and fourth stage nozzle 42. Each of nozzles 36, 38, 40 and 42 has respective inner band and outer band, as further described herein, and a plurality of circumferentially spaced nozzle vanes extending therebetween, including first stage vanes 29, second stage vanes 31, third stage vanes 33 and fourth stage vanes 35. Alternately, between the turbine disks 20, 22, 24 and 26 from forward to aft are spacers 44, 46, 48 and 50 each located radially inwardly of a respective nozzle 36, 38, 40 and 42. Consequently, it will be appreciated that a four-stage turbine 14 is illustrated wherein the first stage comprises nozzle 36 and rotor disk 20; the second stage, nozzle 38 and rotor disk 22; the third stage, nozzle 40 and rotor disk 24 and finally, the fourth stage, nozzle 42 and rotor disk 26. It will be appreciated that the disks 20, 22, 24 and 26 and spacers 44, 46, 48 and 50 are secured to one another by a plurality of circumferentially spaced axially extending bolts 51, as in conventional gas turbine construction. In one non-limiting exemplary embodiment of the present invention the industrial gas turbine is a GE H-series industrial gas turbine. The first stage nozzle 36 and rotor disk 20 will be described in further detail. In conjunction with an exemplary embodiment of the invention, since this is the hottest stage of the turbine. However, as would be readily understood by one of ordinary skill, the detailed description of this stage of the turbine may be applied to the other turbine stages also.

In an exemplary embodiment of the present invention, a gas turbine cooling medium comprising steam 27, is supplied from an intermediate pressure superheater (not shown) and a high pressure steam turbine exhaust (not shown) nozzle cooling circuit to a vane cooling circuit 37 and a rotor cooling circuit 39. Referring to FIG. 1, a bore tube assembly 52 includes outer and inner tubes 54,56, respectively, defining an annular steam cooling supply passage 58 and a spent steam return passage 60. The supply and return passages 58,60, respectively, communicate steam to and from the outer rim of the rotor through sets of radial conduits supply 62 and radial return 64 and axially extending conduits such as axial return conduit 66, that are circumferentially spaced about the rotor rim for supplying cooling steam to the rotor disk 20 and bucket 28 and nozzle 36 and vanes 29. Return or spent cooling steam flows through axially extending return conduits 66 and radially extending return conduits 64, for flow coaxially from the rotor bore via return passage 60.

In an exemplary embodiment of the present invention, referring to FIGS. 1, 2 and 3, a stationary nozzle 36 comprising the turbine inlet 13 and configured to receive the combustion product hot gas output 12 is provided. The nozzle 36 comprising a global change outer band 68, an inner band 70 and a plurality of circumferentially spaced vanes 29 extending therebetween, wherein the vanes 29 each include vane cooling circuit 37. The outer and inner bands 68,70, respectively, are fixed to the plurality of vanes 29. It will be appreciated that the outer and inner bands 68,70, respectively, and vanes 31 are provided in segments and the segments are disposed in an annular array about the axis A (See FIG. 1) of the turbine 14. The space between the outer and inner bands 68,70, respectively, and containing the vanes 29 defines the gas flow passageway for the hot gas output 12 through the gas turbine 14.

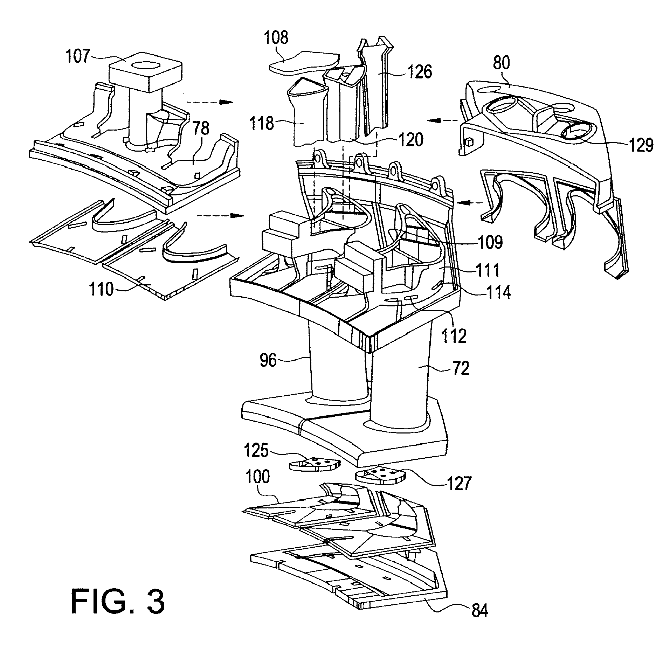

The outer band 68 includes an outer band wall 74 in part defining the hot gas output 12 and a first cover 76 formed of forward and aft first covers 78,80, respectively. The inner band 70 includes an inner wall 82 in part defining the passageway for hot gas output 12 and a second inner cover 84. The vanes 29 extend between the outer and inner bands 68,70, respectively, and are divided into serpentine cavities, wherein the cavities comprise first, second, third, fourth and fifth cavities 86, 88, 90, 92 and 94, respectively. The cavities are arranged in sequence from a leading edge 96 of the vane 29 to a trailing edge 98 by internal ribs 100, 102, 104 and 106. As illustrated in FIG. 3, an outer chamber 108 overlies and closes the first and second cavities 86,88, respectively, and a further vane cover (not shown) overlies cavity 92. The vanes 29 include pressure and suction sidewalls 109,111, respectively, extending between the leading and trailing edges 96,98, respectively, and the vane cooling circuit 37 comprising cavities 86, 88, 90, 92 and 94 located within the side walls 109 and 111 configured for circulation of steam 27 as a coolant.

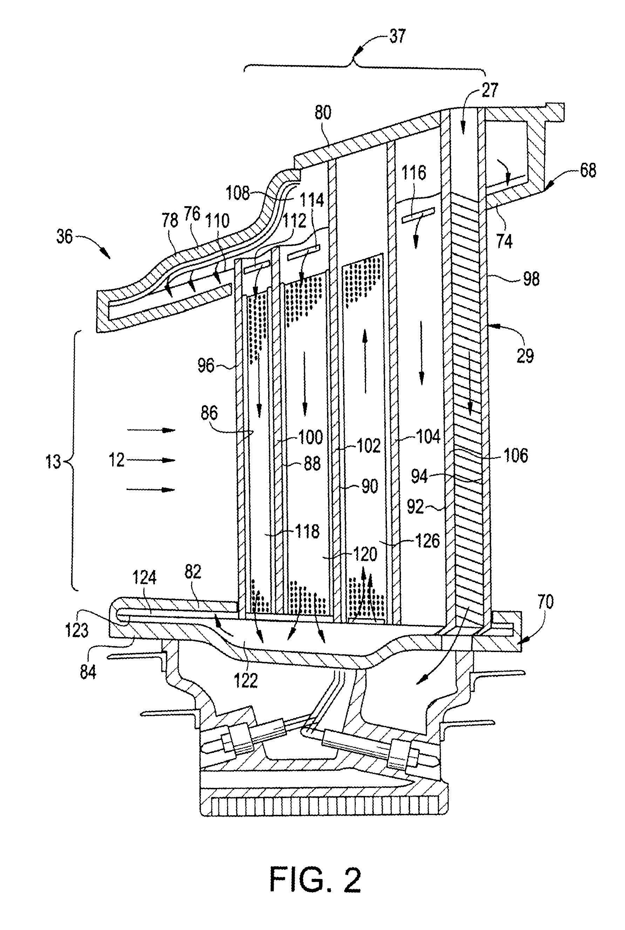

Referring to FIGS. 2 and 3, steam 27, acting as a cooling medium flows into the outer chamber 108 of the outer band 68 through a steam inlet port 107 in the forward cover 78. The steam necessarily flows through the first impingement openings of a first impingement plate 110 for impingement cooling the outer wall 74 of the outer band 68. The spent impingement cooling steam flows through lateral openings 112, 114 and 116 of the first, second and fourth cavities 86, 88 and 92, respectively. Because the cavities are closed at their upper ends by cover plates, the steam flows radially inwardly and within inserts 118 and 120. In the first and second cavities 86, 88, respectively, the steam flows outwardly through the impingement cooling holes in the walls of the inserts for impingement cooling of the registering sidewalls 109 and 111 of the vanes 29. The spent cooling steam from the first and second cavities 86, 88, respectively, flows radially inwardly to the inner band 70 exiting into an inner chamber 122 through guides 125 and 127. The steam from the lateral opening 116 flows through the fourth cavity 92 in a radially inward direction to convectively cool the vane 29 pressure 109 and suction 111 sidewalls and into the chamber 122. The steam in the inner chamber 122 from cavities 86, 88 and 92 flows through impingement openings in the second impingement plate 123 into the outer chamber 124 of the inner band 70. This spent cooling steam lies in communication with the radial inner end of the third cavity insert 126 for flow radially outwardly along the insert 126. The returning steam flow also flows through impingement openings in the insert 126 for impingement cooling of the opposite side walls of the vane 72 adjacent the third cavity 90. The spent steam then flows out of the segment through the steam exit port 129 in the aft cover 80. Simultaneously, the compressor discharge air flows into the fifth cavity 94 and radially inwardly therealong for cooling the trailing edge 98. The spent cooling air discharges through the inner band 70 into the disk space of the rotor. Any portions not cooled by steam will generally incorporate a form of air cooling. The nozzle steam cooling circuit and the steam cooling circuits of the associated vanes will preferably be closed-loop circuits. In order to increase the efficiency of the gas turbine, these steam cooling circuits may also be incorporated into a steam turbine, wherein the steam turbine and gas turbine comprise a combined cycle system. All or portions of the second, third and fourth stage nozzles may also similarly incorporate closed-loop steam cooling. Any portions of the nozzles or vanes in any of the turbine stages that are not cooled by steam will generally incorporate a form of air cooling. In an alternate embodiment, the first stage vanes may incorporate both steam cooling and air cooling.

In an alternate exemplary embodiment of the present invention, the second, third and fourth stage nozzles 38, 40 and 42, respectively, may incorporate air-cooling by compressor discharge air. The second, third and fourth stage nozzles may also, in another exemplary embodiment, incorporate an open loop air-cooled nozzle or a combination of open and closed-loop nozzles. For example, the trailing edge cavity may receive high pressure air from the compressor discharge and contain an air film cooling flow along the opposite sidewalls of the vane adjacent the trailing edge.

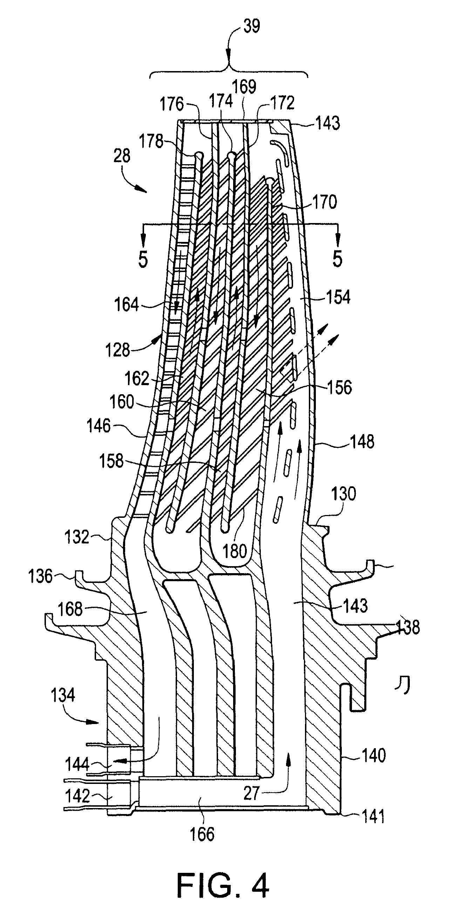

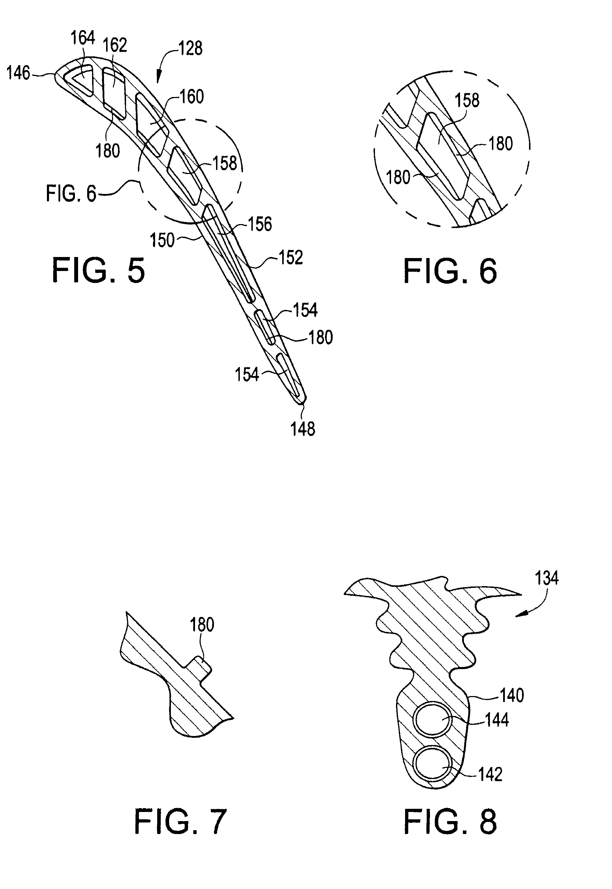

Referring to FIGS. 4-8, a bucket 28 proximate nozzle 36 in accordance with this invention comprises an airfoil portion 128 attached to a platform portion 130 which seals the shank 132 of the bucket 28 from the hot gas output 12 in the combustion flow path. The shank 132 is removably attached to a rotor disk 20 by a conventional dovetail 134. Angel wing seals 136,138 provide sealing of the wheel space cavities. With reference also to FIG. 8, the dovetail 134 includes an extension 140 below the dovetail 134 which serves to supply and remove cooling steam from the bucket via axially arranged passages 142 and 144 and which communicate with axially oriented rotor passages (not shown). The airfoil portion 128 has leading and trailing edges 146,148, respectively, and pressure and suction sidewalls 150,152, respectively. While the leading edge 146 is not configured for film cooling, the trailing edge 148 may optionally be configured for film cooling.

With specific reference now to FIG 4, the rotor cooling circuit 39 disposed within the airfoil portion 128 of the bucket 28 defines a closed serpentine circuit having a total of six radially extending passages 154, 156, 158, 160, 162 and 164, with alternating radially inward and radially outward passages extending from a primary radial supply passage 166 at root 141 of the bucket 28 to the tip 143, turning 180° and then extending from the tip 143 and ultimately back to the root 141 to a primary return passage 168. Note that FIG. 4 also shows a tip cap 169 that seals the radially outer end of the airfoil portion 128.

In the illustrated embodiment, there are three radially outer tip turns and two radially inner root turns, forming six passages, three (154, 158 and 162) in the radially outward direction and three (156, 160 and 164) in the radially inward direction. The various passages are separated by five radially extending ribs or interior partitions 170, 172, 174, 176 and 178 which form the tip and root turns. These ribs extend the full width of the airfoil portion 128, i.e., from the suction side 152 of the airfoil 128 to the pressure side 150. As shown, steam 27 flows initially upwardly or radially outwardly through the trailing edge passage 154 first, and radially downwardly or inwardly through the leading edge passage 164 last. The steam is input at the trailing edge cooling passage 154, via passages 142 and 143, first, since the trailing edge 148 of the bucket 28 is typically the most difficult region to cool.

The trailing edge 148 may also be configured for film cooling. Film cooling at the trailing edge 148 is permissible because the trailing edge 148 is not directly impinged with the hot gas output 12 and associated ash particles, and thus, film cooling holes on the trailing edge 148 are not susceptible to being plugged by impingement of bottom and fly ash particles that exist in the hot gas output 12 in an amount greater than 0.1 % by weight of the hydrocarbon fuel input.

Turbulators 180 are used in passages 156-162 to enhance heat transfer from the bucket walls to the steam cooling medium. The turbulators extend only into the cooling passage, not so far as to restrict coolant flow, but far enough to enhance heat transfer from the bucket walls to the cooling medium. Turbulator 180 placement, size, height to width ratio, pitch, orientation and corner radii are all selected to provide efficient heat transfer from the bucket walls to the steam cooling medium. The rotor steam cooling circuit and the steam cooling circuits of the associated buckets will preferably be closed-loop circuits. In order to increase the efficiency of the gas turbine, these steam cooling circuits may also be incorporated into a steam turbine, wherein the steam turbine and gas turbine comprise a combined cycle system. All or portions of the second, third and fourth stage buckets may also similarly incorporate closed-loop steam cooling. Any portions of the rotor or buckets in any of the turbine stages that are not cooled by steam will generally incorporate a form of air cooling. In an alternate embodiment, the first stage buckets may incorporate both steam cooling and air cooling.

In an alternate embodiment of the present invention, the first, second and third stage buckets 22, 24 and 36, respectively, may be open loop air-cooled or a combination of closed-loop and open loop where the air is supplied by compressor discharge air. For example, the trailing edge passage may receive high pressure air from the compressor discharge and contain an air film cooling flow along the opposite sidewalls of the bucket adjacent the trailing edge.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

For completeness, various aspects of the invention are now set out in the following numbered clauses:
1. A gas turbine comprising:
   a combustor configured to burn a hydrocarbon fuel input and provide a combustion product hot gas output to a turbine inlet and a turbine inlet temperature exceeding about 2200°F, the hot gas output comprising ash in an amount of 0.1 % or more by weight of the hydrocarbon fuel input;
   a stationary nozzle comprising the turbine inlet and configured to receive the hot gas output, the nozzle comprising an outer band, an inner band and a plurality of circumferentially spaced vanes extending therebetween, the vanes each having an airfoil portion having a leading edge and a trailing edge, a pressure sidewall and a suction sidewall, the pressure and suction sidewalls extending between the leading and trailing edges, and a vane cooling circuit located within the sidewalls configured for circulation of steam as a coolant for the vane from a nozzle cooling circuit; and
   a rotatable rotor proximate the nozzle configured to receive the hot gas output exiting the nozzle, the rotor comprising a central rotor disk and a plurality of outwardly extending, circumferentially spaced buckets disposed thereon, the buckets each having a shank portion removably attached to the disk and an airfoil portion having a leading edge and a trailing edge, a pressure sidewall and a suction sidewall, the pressure and suction sidewalls extending between the leading and trailing edges, and a bucket cooling circuit located within the sidewalls and the shank configured for circulation of steam as a coolant for the bucket from a rotor cooling circuit, wherein the rotor is configured to rotate upon receipt of the hot gas output and produce power as part of a turbine power cycle.
2. The gas turbine of clause 1, wherein the hydrocarbon fuel comprises coal, a refinery residual or biomass.
3. The gas turbine of clause 2, wherein the hydrocarbon fuel is coal in the form of a coal slurry or a dry pulverized coal.
4. The gas turbine of clause 1, wherein the combustor is configured to burn a hydrocarbon fuel input and provide a combustion product hot gas output to a turbine inlet and a turbine inlet temperature exceeding about 2600°F.
5. The gas turbine of clause 1, wherein the combustor is configured to burn a hydrocarbon fuel input and provide a combustion product hot gas output to a turbine inlet and a turbine inlet temperature exceeding about 2800°F.
6. The gas turbine of clause 1, wherein the hot gas output comprises ash in an amount greater than about 1% by weight of the hydrocarbon fuel input.
7. The gas turbine of clause 1, wherein a vane airfoil has a film cooling hole on a trailing edge thereof.
8. The gas turbine of clause 1, wherein a bucket airfoil has a film cooling hole on a trailing edge thereof.
9. A method of operating a gas turbine comprising:
   providing a hydrocarbon fuel input to a combustor;
   burning the hydrocarbon fuel input in the combustor to provide a combustion product hot gas output to a turbine inlet and a turbine inlet temperature exceeding about 2200°F, the hot gas output comprising ash in an amount of 0.1% or more by weight of the hydrocarbon fuel input;
   providing the hot gas output to a stationary nozzle comprising the turbine inlet, the nozzle comprising an outer band, an inner band and a plurality of circumferentially spaced vanes extending therebetween, the vanes each having an airfoil portion having a leading edge and a trailing edge, a pressure sidewall and a suction sidewall, the pressure and suction sidewalls extending between the leading and trailing edges, and a vane cooling circuit located within the sidewalls;
   cooling the vanes by circulation of steam as a coolant from a nozzle cooling circuit through the vane cooling circuits;
   providing the hot gas output exiting the nozzle to a rotatable rotor proximate the nozzle, the rotor comprising a central rotor disk and a plurality of outwardly extending, circumferentially spaced buckets disposed thereon, the buckets each having a shank portion removably attached to the disk and an airfoil portion having a leading edge and a trailing edge, a pressure sidewall and a suction sidewall, the pressure and suction sidewalls extending between the leading and trailing edges, and a bucket cooling circuit located within the sidewalls and the shank, wherein the rotor is configured to rotate upon receipt of the hot gas output and produce power as part of a turbine power cycle; and
   cooling the buckets by circulation of steam as a coolant from a rotor cooling circuit through the bucket cooling circuits.
10. The method of clause 9, wherein providing the hydrocarbon fuel comprises providing coal, a refinery residual or biomass.
11. The method of clause 10, wherein the hydrocarbon fuel is coal provided as a coal slurry or a dry pulverized coal.
12. The method of clause 10, wherein the turbine power cycle has an efficiency of 60%.
13. The method of clause 9, wherein burning the hydrocarbon fuel input in the combustor provides the hot gas output and a turbine inlet temperature exceeding about 2600°F.
14. The method of clause 9, wherein burning the hydrocarbon fuel input in the combustor provides the hot gas output and a turbine inlet temperature exceeding about 2800°F.
15. The method of clause 9, wherein burning the hydrocarbon fuel input in the combustor provides the hot gas output comprising ash in an amount greater than about 1% by weight of the hydrocarbon fuel input.
16. The method of clause 9, wherein the vane airfoil has a film cooling hole on a trailing edge thereof.
17. The method of clause 9, wherein the bucket airfoil has a film cooling hole on a trailing edge thereof.
18. A gas turbine comprising:
   a combustor configured to burn a hydrocarbon fuel input and provide a combustion product hot gas output to a turbine inlet and a turbine inlet temperature exceeding about 2200°F, the hot gas output comprising ash in an amount of 0.1 % or more by weight of the hydrocarbon fuel input;
   a stationary nozzle comprising the turbine inlet and configured to receive the hot gas output, the nozzle configured for circulation of steam as a coolant from a nozzle cooling circuit; and
   a rotatable rotor proximate the nozzle configured to receive the hot gas output exiting the nozzle, the rotor configured for circulation of steam as a coolant from a rotor cooling circuit, wherein the rotor is configured to rotate upon receipt of the hot gas output and produce power as part of a turbine power cycle.
19. The gas turbine of clause 18, wherein the combustor is configured to burn a hydrocarbon fuel input and provide a combustion product hot gas output to a turbine inlet and a turbine inlet temperature exceeding about 2600°F, and the hot gas output comprises ash in an amount greater than about 1% by weight of the hydrocarbon fuel input.
20. The gas turbine of clause 18, wherein the combustor is configured to burn a hydrocarbon fuel input and provide a combustion product hot gas output to a turbine inlet and a turbine inlet temperature exceeding about 2800°F, and the hot gas output comprises ash in an amount greater than about 1% by weight of the hydrocarbon fuel input.

## Claims

1. A gas turbine (14) comprising:
a combustor (10) configured to burn a hydrocarbon fuel input and provide a combustion product hot gas output (12) to a turbine inlet (13) and a turbine inlet temperature exceeding about 2200°F, the hot gas output (12) comprising ash in an amount of 0.1 % or more by weight of the hydrocarbon fuel input;
a stationary nozzle (36) comprising the turbine inlet (13) and configured to receive the hot gas output (12), the nozzle (36) comprising an outer band (68), an inner band (70) and a plurality of circumferentially spaced vanes (29) extending therebetween, the vanes (29) each having an airfoil portion having a leading edge (96) and a trailing edge (98), a pressure sidewall (109) and a suction sidewall (111), the pressure and suction sidewalls (109, 111) extending between the leading and trailing edges (96, 98), and a vane cooling circuit (37) located within the sidewalls configured for circulation of steam (27) as a coolant for the vane from a nozzle cooling circuit (52); and
a rotatable rotor (R) proximate the nozzle (36) configured to receive the hot gas output (12) exiting the nozzle (36), the rotor (16) comprising a central rotor disk (20) and a plurality of outwardly extending, circumferentially spaced buckets (28) disposed thereon, the buckets each having a shank (132) portion removably attached to the disk and an airfoil portion (128) having a leading edge (146) and a trailing edge (148), a pressure sidewall (150) and a suction sidewall (152), the pressure and suction sidewalls (150, 152) extending between the leading and trailing edges (146, 148), and a bucket cooling circuit (39) located within the sidewalls and the shank (132) configured for circulation of steam (27) as a coolant for the bucket (28) from a rotor cooling circuit (52), wherein the rotor (R) is configured to rotate upon receipt of the hot gas output (12) and produce power as part of a turbine power cycle.

2. The gas turbine (14) of claim 1, wherein the hydrocarbon fuel comprises coal, a refinery residual or biomass.

3. The gas turbine (14) of claim 2, wherein the hydrocarbon fuel is coal in the form of a coal slurry or a dry pulverized coal.

4. The gas turbine (14) of any of the preceding claims, wherein the combustor (10) is configured to burn a hydrocarbon fuel input and provide a combustion product hot gas output (12) to a turbine inlet (13) and a turbine inlet temperature exceeding about 2600°F.

5. The gas turbine (14) of claim 4, wherein the turbine inlet temperature exceeds about 2800°F.

6. The gas turbine of any of the preceding claims, wherein the hot gas output comprises ash in an amount greater than about 1% by weight of the hydrocarbon fuel input.

7. The gas turbine of any of the preceding claims, wherein a vane airfoil has a film cooling hole on a trailing edge thereof.

8. The gas turbine of any of the preceding claims, wherein a bucket airfoil has a film cooling hole on a trailing edge thereof.

9. A method of operating a gas turbine comprising:
providing a hydrocarbon fuel input to a combustor (10);
burning the hydrocarbon fuel input in the combustor (10) to provide a combustion product hot gas output (12) to a turbine inlet (13) and a turbine inlet (13) temperature exceeding about 2200°F, the hot gas output (12) comprising ash in an amount of 0.1% or more by weight of the hydrocarbon fuel input;
providing the hot gas output (12) to a stationary nozzle (36) comprising the turbine inlet (13), the nozzle (36) comprising an outer band (68), an inner band (70) and a plurality of circumferentially spaced vanes (29) extending therebetween, the vanes (29) each having an airfoil portion having a leading edge (96) and a trailing edge (98), a pressure sidewall (109) and a suction sidewall (111), the pressure and suction sidewalls (109, 111) extending between the leading and trailing edges (96, 98), and a vane cooling circuit (37) located within the sidewalls;
cooling the vanes (29) by circulation of steam as a coolant from a nozzle cooling circuit (52) through the vane cooling circuits (37);
providing the hot gas output (12) exiting the nozzle (36) to a rotatable rotor (16) proximate the nozzle (36), the rotor (16) comprising a central rotor disk (20) and a plurality of outwardly extending, circumferentially spaced buckets (28) disposed thereon, the buckets each having a shank (132) portion removably attached to the disk and an airfoil portion (128) having a leading edge (146) and a trailing edge (148), a pressure sidewall (150) and a suction sidewall (152), the pressure and suction sidewalls (150, 152) extending between the leading and trailing edges (146, 148), and a bucket cooling circuit (39) located within the sidewalls (150, 152) and the shank (132), wherein the rotor (R) is configured to rotate upon receipt of the hot gas output (12) and produce power as part of a turbine power cycle; and
cooling the buckets (28) by circulation of steam as a coolant from a rotor cooling circuit (52) through the bucket cooling circuits (39).

10. The method of claim 9, wherein providing the hydrocarbon fuel comprises providing coal, a refinery residual or biomass.

11. The method of claim 10, wherein the hydrocarbon fuel is coal provided as a coal slurry or a dry pulverized coal.

12. The method of claim 10 or 11, wherein the turbine power cycle has an efficiency of 60%.

13. The method of any of claims 9 to 12, wherein burning the hydrocarbon fuel input in the combustor provides the hot gas output and a turbine inlet temperature exceeding about 2600°F.

14. A gas turbine (14) comprising:
a combustor (10) configured to burn a hydrocarbon fuel input and provide a combustion product hot gas output (12) to a turbine inlet (13) and a turbine inlet temperature exceeding about 2200°F, the hot gas output (12) comprising ash in an amount of 0.1 % or more by weight of the hydrocarbon fuel input;
a stationary nozzle (36) comprising the turbine inlet (13) and configured to receive the hot gas output (12), the nozzle (36) configured for circulation of steam (27) as a coolant from a nozzle cooling circuit (52); and
a rotatable rotor (R) proximate the nozzle (36) configured to receive the hot gas output (12) exiting the nozzle (36), the rotor (R) configured for circulation of steam (27) as a coolant from a rotor cooling circuit (52), wherein the rotor (16) is configured to rotate upon receipt of the hot gas output (12) and produce power as part of a turbine power cycle.

15. The gas turbine of claim 14, wherein the combustor (10) is configured to burn a hydrocarbon fuel input and provide a combustion product hot gas output (12) to a turbine inlet (13) and a turbine inlet temperature exceeding about 2600°F, and the hot gas output (12) comprises ash in an amount greater than about 1% by weight of the hydrocarbon fuel input.
